# EUROPÄISCHE PATENTSCHRIFT

(11) **EP 2 059 463 B1**
(45) Veröffentlichungstag und Bekanntmachung des Hinweises auf die Patenterteilung: **21.10.2009**
(21) Anmeldenummer: 07818027.0
(22) Anmeldetag: 16.08.2007
(51) Int. Cl.: B65G 15/10, B65G 23/26, B65G 47/71

(54) **DOSIERBAND**
UNIT-FEED BELT
BANDE DOSEUSE

(30) Priorität: 19.08.2006 DE 102006039086
(43) Veröffentlichungstag der Anmeldung: 20.05.2009
(73) Patentinhaber: KHS AG, 44143 Dortmund (DE)
(72) Erfinder: COX, Bernd, 47652 Weeze (DE); WILLEMSEN, Stefan, 47652 Weeze (DE)
(86) Internationale Anmeldenummer: PCT/EP2007/007205
(87) Internationale Veröffentlichungsnummer: WO 2008/022734

(56) Entgegenhaltungen:
- WO-A-20/06002156
- US-A1- 2004 104 100

## Beschreibung

Die Erfindung bezieht sich auf ein Dosierband gemäß Oberbegriff Patentanspruch 1.

In Transportstrecken für Produkte unterschiedlichster Art, wie z. B. Behälter, Verpackungen usw. werden vielfach sogenannte Dosierbänder benötigt, die beispielsweise dazu dienen, aus einem z.B. zunächst ungeordneten Produktstrom oder einem Produktstrom geringerer Breite einen mehrspurigen Produktstrom zu bilden, und zwar in der Form, dass die Produkte möglichst gleichmäßig auf Spuren oder Gassen des mehrspurigen Produktstroms verteilt werden. Eine häufige Anwendung derartiger Dosierbänder ist die gleichmäßig Verteilung angeförderter Produkte auf einzelne Gassen eines mehrspurigen Transporteurs, der den Einlauf einer Verpackungsmaschine oder einer Maschine zum Zusammenstellen von Gebinden bildet.

Das Dosierband besteht aus mehreren Transportbändern, von denen jedes eine geschlossene Schlaufe bildet sowie endlos umlaufend antreibbar ist und die so angeordnet sind, dass sie mit den oberen Längen ihrer Schlaufen seitlich aneinander anschließen und eine gemeinsame horizontale oder im wesentlichen horizontale Transportfläche bilden.

Um die gleichmäßige Verteilung der Produkte in den einzelnen Spuren oder Gassen eines anschließenden Transporteurs zu erreichen, ist bei bekannten Dosierbändern für jedes Transportband jeweils ein eigener Antrieb vorgesehen. Über diese Antriebe ist die Transportgeschwindigkeit der einzelnen Transportbänder individuell steuerbar, und zwar beispielsweise in Abhängigkeit von Sensorsignalen, die von die Verteilung der Produkte auf die einzelnen Spuren oder Gassen des anschließenden Transporteurs überwachenden Sensoren geliefert werden.

Da Dosierbänder in der Regel wenigstens vier- oder sechszügig ausgebildet sind, d.h. wenigstens vier oder sechs Transportbänder aufweisen, stellen die individuellen Antriebe für die einzelnen Transportbänder konstruktiv, aber auch regelungstechnisch einen erheblichen Aufwand dar und bedingen ein großes Bauvolumen. Ein solches Dosierband ist aus der US 2004 /104100 A1 bekannt.

Aufgabe der Erfindung ist es, ein Dosierband aufzuzeigen, welches diese Nachteile vermeidet. Zur Lösung dieser Aufgabe ist ein Dosierband entsprechend dem Patentanspruch 1 ausgebildet.

Bei dem erfindungsgemäßen Dosierband ist für den Antrieb sämtlicher Transportbänder lediglich ein einziger Antriebsmotor (Elektromotor) bzw. Getriebemotor vorgesehen. Durch das Schaltgetriebe sind wenigstens ein Transportband bzw. wenigstens ein Teil der verwendeten Transportbänder individuell zwischen wenigstens zwei Transportgeschwindigkeiten, nämlich zwischen einer niedrigen und einer höheren Transportgeschwindigkeit, stufenförmig schaltbar, bevorzugt aber sämtliche Transportbänder des Dosierbandes.

Weiterbildungen sind Gegenstand der Unteransprüche. Die Erfindung wird im Folgenden anhand der Figuren an einem Ausführungsbeispiel näher erläutert. Es zeigen:

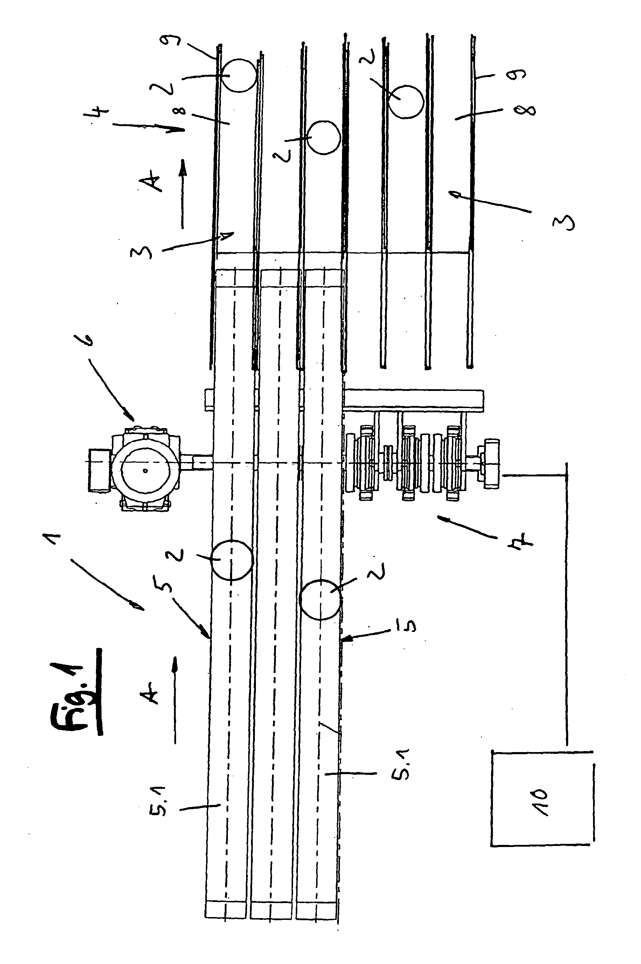

- Fig. 1: in vereinfachter Darstellung und in Draufsicht ein sechszügiges Dosierband gemäß der Erfindung zum Zuführen von Produkten in Gassen eines anschließenden Transporteurs, beispielsweise in Gassen eines Zuführbandes einer Verpackungsmaschine, wobei lediglich drei der insgesamt sechs Einzel- oder Transportbänder bzw. Transportketten dargestellt sind;

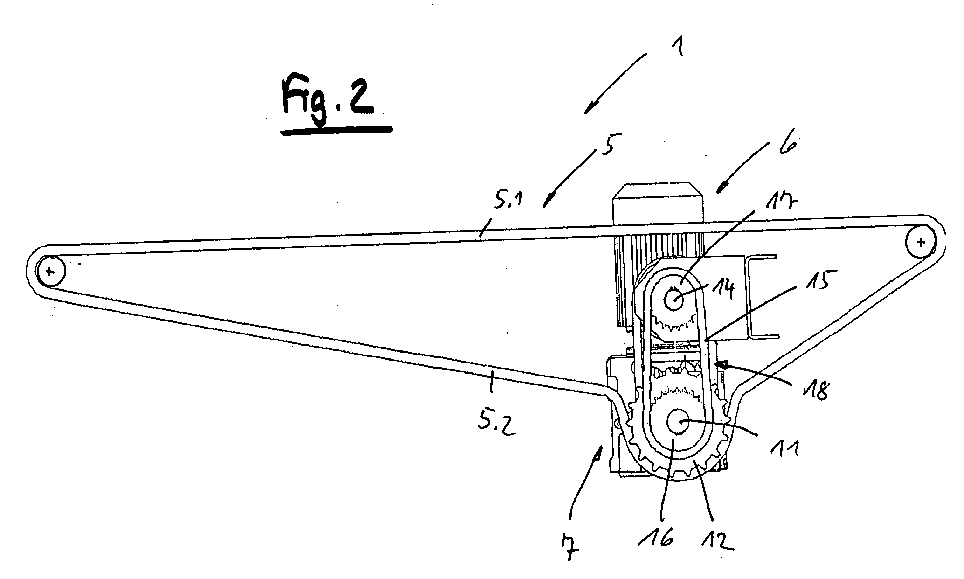

- Fig. 2: das Dosierband der Figur 1 in Seitenansicht;

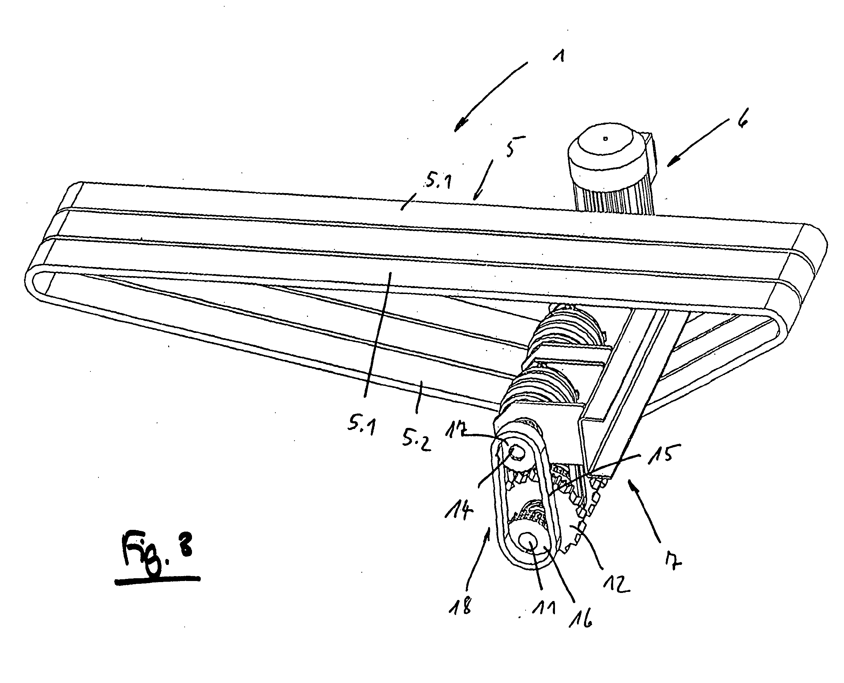

- Fig. 3: in perspektivischer Darstellung die wesentlichen Elemente des Dosierbandes der Figuren 1 und 2;
- Fig. 4: in Detaildarstellung den Antrieb des Dosierbandes der Figuren 1 - 3 mit dem Schaltgetriebe.

Das in den Figuren allgemein mit 1 bezeichnete Dosierband dient zum Zuführen von Produkten 2 an die einzelnen Gassen 3 eines an das Dosierband in Transportrichtung A anschließenden Transporteurs 4, der beispielsweise den Einlauf oder das Zuführband einer Verpackungsmaschine zum Verpacken der Produkte 2 oder zur Zusammenstellung dieser Produkte zu einem Gebinde ist. Das Dosierband 1 ist bei der dargestellten Ausführungsform sechszügig ausgebildet, d.h. es besteht aus sechs parallel zueinander und seitlich aneinander anschließenden, jeweils eine in sich geschlossene Schlaufe bildenden Einzel- oder Transportbändern bzw. Transportketten 5, die mit oben liegenden und seitlich an einander anschließenden Längen 5.1 ihrer Schlaufen eine horizontale oder im Wesentlichen horizontale Transportfläche für die Produkte 2 bilden. Die Transportketten 5 sind durch einen gemeinsame Elektro- bzw. Getriebemotor 6 über ein Schaltgetriebe 7 umlaufend angetrieben, sodass sich die obere Schlaufenlänge 5.1 jeder Transportkette 5 in der Transportrichtung A des Dosierbandes 1 bewegt. An jede Transportkette 5 schließt sich in Transportrichtung A eine Gasse 3 des Transporteurs 4 an, die (Gasse) jeweils von einem Transportband 8 und von die Gasse seitlich begrenzenden Geländern 9 gebildet ist.

Um sicher zu stellen, dass sämtliche Gassen 3 möglichst gleichmäßig mit den Produkten 2 gefüllt werden, d.h. die Produkte 2 in den Gassen 3 beispielsweise mit möglichst gleichem Staudruck in einer einspurigen Reihe gegeneinander anliegen, sind die einzelnen Transportketten 5 stufenförmig mit unterschiedlicher Geschwindigkeit antreibbar, und zwar gesteuert durch eine elektronische Steuereinrichtung 10 und z.B. in Abhängigkeit von Sensorsignalen, die von die Verteilung der Produkte 2 in den Gassen 3 überwachenden Sensoren geliefert werden.

Bei der dargestellten Ausführungsform sind die Transportketten 5 jeweils mit zwei unterschiedlichen Geschwindigkeiten über das Schaltgetriebe 7 antreibbar, und zwar mit einer der Drehzahl n1 der Ausgangswelle des Getriebemotors 6 entsprechenden Geschwindigkeit und einer erhöhten Geschwindigkeit, die einer erhöhten Drehzahl n2 für den Antrieb der Transportketten 5 entspricht und etwa 20% über der Drehzahl n1 liegt. Bei einer bevorzugten Ausführungsform der Erfindung liegt die Drehzahl n1 etwa 10% unterhalb einer Nenndrehzahl, d.h. unterhalb der Drehzahl, bei der die Transportgeschwindigkeit der Transportketten 5 gleich der Transportgeschwindigkeit des Transporteurs 4 bzw. der dortigen Transportbänder 8 ist. Die höhere Drehzahl n2 liegt dann bei dem angenommenen Drehzahlunterschied von 20% etwa 10% oberhalb dieser Nenndrehzahl.

Das Schaltgetriebe 7 ist so ausgebildet, dass es für jede Transportkette 5 auf einer Hauptantriebswelle 11, die mit der Ausgangswelle des Getriebemotors 6 antriebsmäßig verbunden ist, ein als Kettenrad ausgebildetes Transportband oder - ketten-Antriebsrad 12 aufweist, über welches die untere Schlaufenlänge 5.2 der betreffenden Transportkette mit einer ausreichenden Umschlingung geführt ist. Bei der reduzierten Transportgeschwindigkeit der zugehörigen Transportkette 5 wird das jeweilige Transportketten-Antriebsrad 12 direkt von der Hauptantriebswelle 11 über einen Freilauf 13 mit der Geschwindigkeit n1 angetrieben. Bei der erhöhten Transportgeschwindigkeit der zugehörigen Transportkette 5 erfolgt über einen getriebeinternen, steuerbaren Antriebsstrang unter Überdrehen des Freilaufs 13 ein Antrieb des Transportketten-Antriebsrades 12 mit der gegenüber der Drehgeschwindigkeit n1 erhöhten Drehgeschwindigkeit n2.

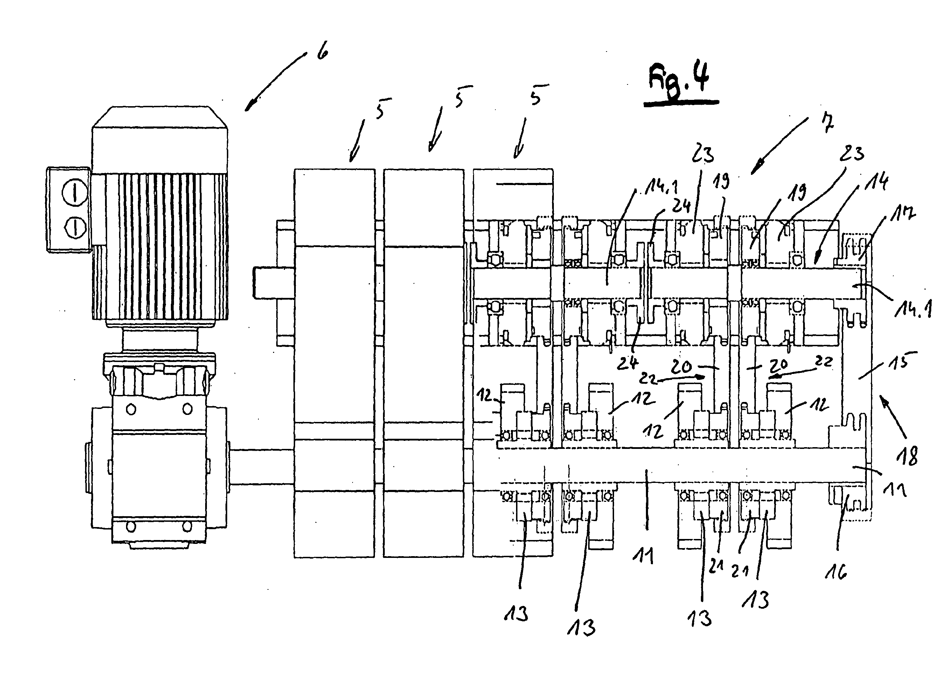

Die Ausbildung des Schaltgetriebes 7 ist mehr im Detail in der Figur 4 dargestellt. Sämtliche Transportketten-Antriebsräder 12 sind jeweils über einen Freilauf 13 antriebsmäßig mit der Hauptantriebswelle 11 verbunden. Weiterhin weist das Schaltgetriebe 7 eine Vorlegewelle 14 auf, die parallel zur Hauptantriebswelle 11, aber gegenüber dieser radial versetzt in einem nicht dargestellten Gehäuse des Schaltgetriebes 7 drehbar gelagert und über einen von einem Zahnriemen 15 und den zugehörigen Zahnriemenrädern 16 und 17 an der Hauptantriebswelle 11 bzw. an der Vorlegewelle 14 gebildeten Zahnriemenantrieb 18 antriebsmäßig mit der Hauptwelle 11 verbunden ist. Für jede Transportkette 5 bzw. für jedes Transportketten-Antriebsrad 12 ist auf der Vorlegewelle 14 ein Zahnriemenrad 19 vorgesehen, welches Bestandteil eines einen Zahnriemen 20 und ein Zahnriemenrad 21 aufweisenden Zahnriemenantriebs 22 ist und welches über eine elektrisch betätigbare Kupplung 23 von der Steuereinrichtung 10 gesteuert an die Vorlegewelle 14 ankoppelbar bzw. von dieser abkoppelbar ist. Jedes Zahnriemenrad 21 ist weiterhin antriebsmäßig mit dem zugehörigen Transportketten-Antriebsrad 12 verbunden.

Die Übersetzungsverhältnisse der Zahnriemenantriebe 18 und 20 sind so gewählt, dass bei einem über die Kupplung 23 antriebsmäßig mit der Vorlegewelle 14 verbundenem Zahnriemenrad 19 das über den zugehörigen Zahnriemenantrieb 23 angetriebene Transportketten-Antriebsrad 12 unter Überdrehung des Freilaufs 13 mit der erhöhten Geschwindigkeit n2 umläuft, bei von der Vorlegewelle 14 abgekoppeltem Zahnriemenantrieb 22 über den Freilauf 13 mit der Geschwindigkeit n1 der Hauptantriebswelle 11 angetrieben wird. Jeder Transportkette 5 bzw. jedem Transportketten-Antriebsrad 12 ist ein eigenständiger Zahnriemenantrieb 22 zugeordnet. Der Zahnriemenantrieb 18 ist für alle Transportketten 5 bzw. Transportketten-Antriebsräder 12 gemeinsam vorgesehen.

Bevorzugt sind die Zahnriemenantriebe 18 und 20 so gewählt, dass die Zahnriemenantriebe 20 jeweils ein Übersetzungsverhältnis 1:1 aufweisen und die gegenüber der Drehgeschwindigkeit n1 der Hauptantriebswelle 11 erhöhte Drehgeschwindigkeit n2, beispielsweise die um 20% erhöhte Drehgeschwindigkeit n2 durch das Übersetzungsverhältnis des gemeinsamen Zahnriemenantriebs 18 erreicht ist.

Das Dosierbandes 1 ermöglicht eine individuelle Änderungen der Geschwindigkeit der einzelnen Transportketten 5 trotz der Verwendung nur eines einzigen Getriebemotors 6. Hierdurch ist eine vereinfachte, insbesondere auch Kosten sparende Ausbildung des Dosierbandes 1 erreicht, und zwar bei der Möglichkeit einer optimalen Steuerung der Füllung der Gassen 3 mit den Produkten 2. Eine Vielzahl von Antriebsmotoren, Antriebswellen, Regelgeräten usw., wie dies bisher bei steuerbaren Dosierbändern erforderlich ist, wird nicht benötigt. Durch die erfindungsgemäße Ausbildung ergibt sich auch eine Platz sparende Konstruktion.

Wie in der Figur 4 ersichtlich, ist die Vorlegewelle 14 sektioniert, d.h. sie besteht aus mehreren stirnseitig aneinander anschließenden und miteinander verbundenen Abschnitten 14', auf denen dann jeweils zwei Kupplungen 23 und zwei Zahnriemenräder 19 vorgesehen sind. Durch diese sektionierte Ausbildung lassen sich unter Verwendung jeweils gleicher Baugruppen wahlweise Schaltgetriebe 7 für z.B. zwei-, vier- oder sechszügige Dosierbänder realisieren.

Wie in der Figur 4 weiterhin dargestellt, sind die Zahnriemenantriebe 22 zweier benachbarter Transportketten-Antriebsräder 12 jeweils zwischen diesen Antriebsrädern vorgesehen, sodass bei dem durch die Breite der Transportbandketten 5 vorgegebenen Abstand der Transportketten-Antriebsräder 12 auf der Hauptantriebswelle 11 ausreichend Platz für die elektrisch betätigbaren Kupplungen 23 sowie auch für die die Abschnitte 14.1 der Vorlegewelle stirnseitig verbindenden Flansche 24 verbleibt.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird.

So ist es beispielsweise möglich, anstelle der Zahnriemenantriebe 18 und 22 auch Kettenantriebe vorzusehen oder aber die antriebsmäßige Verbindung zwischen der Hauptantriebswelle 11 und der Vorlegewelle 14 und/oder zwischen den Transportketten-Antriebsrädern 12 und den auf der Vorlegewelle 14 angeordneten Kupplungen 23 anderweitig auszubilden.

### Bezugszeichenliste

- 1: Dosierband
- 2: Produkt
- 3: Gasse
- 4: Transporteur
- 5: Einzelband bzw. Förderkette
- 5.1: obere Schlaufenlänge der Förderkette 5
- 5.2: untere Schlaufenlänge der Förderkette 5
- 6: Getriebemotor
- 7: Schaltgetriebe
- 8: Transportband
- 9: Geländer
- 10: Steuereinrichtung
- 11: Hauptantriebswelle
- 12: Transportketten-Antriebsrad
- 13: Freilauf
- 14: Vorlegewelle
- 14.1: Abschnitt der Vorlegewelle 14
- 15: Zahnriemen
- 16, 17: Zahnriemenrad
- 18: Zahnriemenantrieb
- 19: Zahnriemenrad
- 20: Zahnriemen
- 21: Zahnriemenrad
- 22: Zahnriemenantrieb
- 23: steuerbare, beispielsweise elektrisch betätigbare Kupplung
- 24: Flansch

- A: Transportrichtung

## Patentansprüche

1. Dosierband zur Verwendung in einer Transportstrecke zum Transportieren von Produkten, mit wenigstens zwei durch einen Antrieb (6, 7) antreibbaren, eine Schlaufe bildenden, endlos umlaufend antreibbaren Transportbändern (5), die mit der jeweils oberen Länge (5.1) ihrer Schlaufe seitlich aneinander anschließend eine gemeinsame Transportfläche für die Produkte (2) bilden, wobei die Umlaufgeschwindigkeit und damit die Transportgeschwindigkeit wenigstens eines Transportbandes (5) individuell einstellbar ist, **dadurch gekennzeichnet, dass** der Antrieb von einem einzigen Antriebsmotor (6) gebildet ist, und dass ein die Transportbänder (5) antriebsmäßig mit dem Antriebsmotor (6) verbindendes Getriebe als Schaltgetriebe (7) derart ausgebildet ist, dass die Geschwindigkeit wenigstens eines Transportbandes (5) durch Schalten stufenförmig veränderbar ist.

2. Dosierband nach Anspruch 1, **dadurch gekennzeichnet, dass** die Geschwindigkeit des wenigstens einen Transportbandes (5) zwischen einer ersten und einer zweiten Geschwindigkeit schaltbar ist.

3. Dosierband nach Anspruch 1 oder 2, **dadurch gekennzeichnet, dass** es wenigstens vier, jeweils eine geschlossene Schlaufe bildende und endlos umlaufend antreibbare Transportbänder (5) aufweist, die mit ihren oberen Schlaufenlängen seitlich aneinander anschließen und eine gemeinsame Transportfläche für die Produkte (2) bilden.

4. Dosierband nach Anspruch 1 oder 2, **dadurch gekennzeichnet, dass** es wenigstens sechs, jeweils eine geschlossene Schlaufe bildende und endlos umlaufend antreibbare Transportbänder (5) aufweist, die mit ihren oberen Schlaufenlängen seitlich aneinander anschließen und eine gemeinsame Transportfläche für die Produkte (2) bilden.

5. Dosierband nach einem der vorhergehenden Ansprüche, **dadurch gekennzeichnet, dass** über das Schaltgetriebe (7) die Geschwindigkeit zumindest eines Teils der Transportbänder (5), vorzugsweise die Geschwindigkeit jedes Transportbandes individuell stufenförmig veränderbar ist.

6. Dosierband nach einem der vorhergehenden Ansprüche, **dadurch gekennzeichnet, dass** das Schaltgetriebe (7) für jedes schaltbare Transportband (5) wenigstens ein Transportband-Antriebsrad (12) aufweist, über welches das wenigstens eine schaltbare Transportband (5) geführt ist und welches antriebsmäßig über ein überdrehbares Kupplungselement (13) mit einer von dem Antriebsmotor (6) angetriebenen Hauptwelle (11) verbunden ist, dass das wenigstens eine Transportband-Antriebsrad (12) jedes schaltbaren Transportbandes (5) weiterhin über einen zu- und wegschaltbaren getriebeinternen Antriebsstrang (18, 22, 23) antriebsmäßig mit einer von dem Antriebsmotor (6) antreibbaren Welle, beispielsweise mit der Hauptwelle (11) verbunden ist, dass der getriebeinterne Antriebsstrang (18, 22, 23) mit einer Übersetzung derart ausgebildet ist, dass bei zugeschaltetem internen Antriebsstrang (18, 22, 23) das wenigstens eine Transportband-Antriebsrad (12) mit einer Geschwindigkeit angetrieben wird, die größer ist als die Geschwindigkeit des Antriebs über das überdrehbare Kupplungselement (13), und dass das überdrehbare Kupplungselement (13) so ausgebildet ist, dass ein Überdrehen des Transportband-Antriebsrades (12) mit einer Geschwindigkeit möglich ist, die größer ist als die Geschwindigkeit bei einem Antrieb des Transportband-Antriebrades (12) über das überdrehbare Kupplungselement.

7. Dosierband nach Anspruch 6, **dadurch gekennzeichnet, dass** für jedes Transportband (5) jeweils wenigstens Transportband-Antriebsrad (12) vorgesehen ist, welches über das überdrehbare Kupplungselement (13) sowie zugleich auch über einen getriebeinternen Antriebsstrang (18, 22, 23) antriebsmäßig mit der Hauptwelle (11) verbunden ist.

8. Dosierband nach Anspruch 6 oder 7, **dadurch gekennzeichnet, dass** das wenigstens eine Transportband-Antriebsrad (12) zumindest des wenigstens einen schaltbaren Transportbandes (5) mit dem überdrehbaren Kupplungselement (13) auf der Hauptwelle (11) angeordnet ist.

9. Dosierband nach einem der Ansprüche 6 - 8, **dadurch gekennzeichnet, dass** für jedes schaltbare Transportband (5) ein individuell zu- und wegschaltbarer getriebeinterner Antriebsstrang (18, 22, 23) vorgesehen ist.

10. Dosierband nach einem der Ansprüche 6 - 9, **dadurch gekennzeichnet, dass** das überdrehbare Kupplungselement ein Freilauf (13) ist.

11. Dosierband nach einem der Ansprüche 6 - 10, **dadurch gekennzeichnet, dass** der zu- und wegschaltbare Antriebsstrang (18, 22, 23) eine das Zu- und Wegschalten bewirkende schaltbare Kupplung (23) aufweist.

12. Dosierband nach einem der Ansprüche 6 - 11, **gekennzeichnet durch** eine Vorlegewelle (14), die über einen ersten Abschnitt (18) des getriebeinternen Antriebsstrangs antriebsmäßig mit der Hauptwelle (11) verbunden ist und über einen zweiten Abschnitt (22) des getriebeinternen Antriebsstrangs gesteuert mit dem wenigstens einen Transportband-Antriebsrad (12) des wenigstens einen schaltbaren Transportbandes (5) verbindbar ist.

13. Dosierband nach Anspruch 12, **dadurch gekennzeichnet, dass** der erste und/oder zweite Abschnitt (22) des internen Antriebsstrangs von einem Riemenantrieb, vorzugsweise Zahnriemenantrieb, oder von einem Kettenantrieb gebildet ist.

14. Dosierband nach einem der Ansprüche 11 - 13, **dadurch gekennzeichnet, dass** die Kupplung (23) sowie ein Rad (19) des zweiten Abschnittes des wenigstens einen getriebeinternen Antriebsstrangs auf der Vorlegewelle (14) vorgesehen sind.

15. Dosierband nach einem der Ansprüche 12 - 14, **dadurch gekennzeichnet, dass** die Vorlegewelle (14) sowie der diese Vorlegewelle antriebsmäßig mit der Hauptwelle (11) verbindende erste Abschnitt (18) des getriebeinternen Antriebstrangs für sämtliche geschaltete Transportbänder (5) bzw. deren Transportband-Antriebsräder (13) gemeinsam vorgesehen ist.

16. Dosierband nach einem der vorhergehenden Ansprüche, **dadurch gekennzeichnet, dass** der Antriebsmotor ein Getriebemotor (6) ist.

17. Dosierband nach einem der vorhergehenden Ansprüche, **dadurch gekennzeichnet, dass** die Transportbändern (5) Transportketten sind.

18. Dosierband nach einem der vorhergehenden Ansprüche, **dadurch gekennzeichnet, dass** das wenigstens eine schaltbare Transportband (5) über das Schaltgetriebe (7) wahlweise mit einer ersten Geschwindigkeit (n1) und einer zweiten, etwa 20% höheren Geschwindigkeit (n2) antreibbar ist.

19. Dosierband nach einem der vorhergehenden Ansprüche und als Bestandteil einer Transportstrecke mit wenigstens einem dem Dosierband (1) in Transportrichtung (A) vorausgehenden und/oder an das Dosierband (1) in Transportrichtung (A) anschließenden weiteren Transportband (8), **dadurch gekennzeichnet, dass** das wenigstens eine schaltbare Transportband (5) des Dosierbandes (1) über den Antriebsmotor (6) und das Schaltgetriebe (7) derart antreibbar ist, dass die niedrigere Geschwindigkeit etwa 10% unter und die höhere Geschwindigkeit etwa 10% über der Transportgeschwindigkeit des wenigstens einen vorausgehenden und/oder des wenigstens einen anschließenden Transportbandes (8) liegt.

## Claims

1. Unit-feed belt for use in a transport path for transporting products, comprising at least two transport belts (5) which can be driven by a drive (6, 7), form a loop and can be driven such that they circulate endlessly, which transport belts adjoin one another laterally with the respective upper length (5.1) of their loop and form a common transport surface for the products (2), wherein the circulation speed and thus the transport speed of at least one transport belt (5) can be set individually, **characterised in that** the drive is formed by a single drive motor (6), and **in that** a gear mechanism which connects the transport belts (5) in drive terms to the drive motor (6) is designed as a switching gear mechanism (7) in such a way that the speed of at least one transport belt (5) can be varied in stages by switching.

2. Unit-feed belt according to claim 1, **characterised in that** the speed of the at least one transport belt (5) can be switched between a first and a second speed.

3. Unit-feed belt according to claim 1 or 2, **characterised in that** it comprises at least four transport belts (5) which in each case form a closed loop and can be driven such that they circulate endlessly, which transport belts adjoin one another laterally with their upper loop lengths and form a common transport surface for the products (2).

4. Unit-feed belt according to claim 1 or 2. **characterised in that** it comprises at least six transport belts (5) which in each case form a closed loop and can be driven such that they circulate endlessly, which transport belts adjoin one another laterally with their upper loop lengths and form a common transport surface for the products (2).

5. Unit-feed belt according to one of the preceding claims, **characterised in that** the speed of at least some of the transport belts (5), preferably the speed of each transport belt, can be varied individually in stages via the switching gear mechanism (7).

6. Unit-feed belt according to one of the preceding claims, **characterised in that** the switching gear mechanism (7) has for each switchable transport belt (5) at least one transport belt drive wheel (12), over which the at least one switchable transport belt (5) is passed and which is connected in drive terms via an over-rotatable clutch element (13) to a main shaft (11) which is driven by the drive motor (6), **in that** the at least one transport belt drive wheel (12) of each switchable transport belt (5) is furthermore connected in drive terms, via a drive train (18, 22, 23) which is internal to the gear mechanism and which can be connected and disconnected, to a shaft which can be driven by the drive motor (6), for example to the main shaft (11), **in that** the drive train (18, 22, 23) internal to the gear mechanism is formed with a ratio such that, when the internal drive train (18, 22, 23) is connected, the at least one transport belt drive wheel (12) is driven at a speed which is greater than the speed of the drive via the over-rotatable clutch element (13), and **in that** the over-rotatable clutch element (13) is designed in such a way that an over-rotation of the transport belt drive wheel (12) is possible at a speed which is greater than the speed when driving the transport belt drive wheel (12) via the over-rotatable clutch element.

7. Unit-feed belt according to claim 6, **characterised in that** for each transport belt (5), in each case at least one transport belt drive wheel (12) is provided which is connected in drive terms to the main shaft (11) via the over-rotatable clutch element (13) and at the same time also via a drive train (18, 22, 23) internal to the gear mechanism.

8. Unit-feed belt according to claim 6 or 7, **characterised in that** the at least one transport belt drive wheel (12) at least of the at least one switchable transport belt (5) is arranged with the over-rotatable clutch element (13) on the main shaft (11).

9. Unit-feed belt according to one of claims 6 to 8, **characterised in that**, for each switchable transport belt (5), there is provided a drive train (18, 22, 23) internal to the gear mechanism which can be connected and disconnected individually.

10. Unit-feed belt according to one of claims 6 to 9, **characterised in that** the over-rotatable clutch element is a freewheel (13).

11. Unit-feed belt according to one of claims 6 to 10, **characterised in that** the drive train (18, 22, 23) which can be connected and disconnected comprises a switchabte clutch (23) which brings about the connection and disconnection.

12. Unit-feed belt according to one of claims 6 to 11, **characterised by** a countershaft (14) which is connected in drive terms to the main shaft (11) via a first section (18) of the drive train internal to the gear mechanism and can be connected to the at least one transport belt drive wheel (12) of the at least one switchable transport belt (5) in a controller manner via a second section (22) of the drive train internal to the gear mechanism.

13. Unit-feed belt according to claim 12, **characterised in that** the first and/or second section (22) of the internal drive train is formed by a belt drive, preferably a toothed belt drive, or by a chain drive.

14. Unit-feed belt according to one of claims 11 to 13, **characterised in that** the clutch (23) and also a wheel (19) of the second section of the at least one drive train internal to the gear mechanism are provided on the countershaft (14).

15. Unit-feed belt according to one of claims 12 to 14, **characterised in that** the countershaft (14) and also the first section (18) of the drive train internal to the gear mechanism which connects this countershaft in drive terms to the main shaft (11) is provided for all the switched transport belts (5) or transport belt drive wheels (13) thereof in common.

16. Unit-feed belt according to one of the preceding claims, **characterised in that** the drive motor is a geared motor (6).

17. Unit-feed belt according to one of the preceding claims, **characterised in that** the transport belts (5) are transport chains.

18. Unit-feed belt according to one of the preceding claims, **characterised in that** the at least one switchable transport belt (5) can be driven via the switching gear mechanism (7) selectively at a first speed (n1) and a second speed (n2) which is approximately 20% higher.

19. Unit-feed belt according to one of the preceding claims and as part of a transport path comprising at least one further transport belt (8) which precedes the unit-feed belt (1) in the transport direction (A) and/or follows the unit-feed belt (1) in the transport direction (A). **characterised in that** the at least one switchable transport belt (5) of the unit-feed belt (1) can be driven via the drive motor (6) and the switching gear mechanism (7) in such a way that the lower speed is approximately 10% bellow and the higher speed is approximately 10% above the transport speed of the at least one preceding and/or at least one following transport belt (8).

## Revendications

1. Bande de dosage destinée à être utilisée dans une voie de transport pour le transport de produits, comportant au moins deux bandes transporteuses (5), formant une boucle et aptes à être entraînées en rotation en continu par un système d'entraînement (6, 7), lesquelles forment avec la longueur (5.1) respectivement supérieure de leur boucle de manière adjacente latéralement une surface de transport commune pour les produits (2), la vitesse de rotation et donc la vitesse de transport pouvant être réglée indépendamment pour au moins une bande transporteuse (5), **caractérisée en ce que** le système d'entraînement est formé par un seul moteur d'entraînement (6), et **en ce qu'**un engrenage, reliant en transmission les bandes transporteuses (5) avec le moteur d'entraînement (6), est réalisé sous forme de boîte de vitesses (7) de telle sorte que la vitesse d'au moins une bande transporteuse (5) peut être variée par paliers par une commande.

2. Bande de dosage selon la revendication 1, **caractérisée en ce que** la vitesse de ladite au moins une bande transporteuse (5) peut être commutée entre une première et une deuxième vitesse.

3. Bande de dosage selon la revendication 1 ou 2, **caractérisée en ce qu'**elle comporte au moins quatre bandes transporteuses (5), formant chacune une boucle fermée et aptes à être entraînées en rotation en continu, lesquelles sont adjacentes latéralement les une aux autres avec leurs longueurs de boucle supérieures et forment une surface de transport commune pour les produits (2).

4. Bande de dosage selon la revendication 1 ou 2, **caractérisée en ce qu'**elle comporte au moins six bandes transporteuses (5), formant respectivement une boucle fermée et aptes à être entraînées en rotation en continu, lesquelles sont adjacentes latéralement les unes aux autres avec leurs longueurs de boucle supérieures et forment une surface de transport commune pour les produits (2).

5. Bande de dosage selon l'une des revendications précédentes, **caractérisée en ce que** la vitesse d'au moins une partie des bandes transporteuses (5), de préférence la vitesse de chaque bande transporteuse, peut être variée par paliers individuellement par l'intermédiaire de la boîte de vitesses (7).

6. Bande de dosage selon l'une des revendications précédentes, **caractérisée en ce que** la boîte de vitesses (7) comporte, pour chaque bande transporteuse (5) à commander, au moins une roue d'entraînement (12), sur laquelle est guidée au moins une bande transporteuse (5) à commander et laquelle est reliée en transmission, par l'intermédiaire d'un élément d'accouplement (13) apte à tourner en surrégime, à un arbre principal (11) actionné par le moteur d'entraînement (6), **en ce que** ladite au moins une roue d'entraînement (12) de chaque bande transporteuse (5) à commander est, en outre, par l'intermédiaire d'une ligne de transmission (18, 22, 23) interne de la boîte de vitesses et apte à être accouplée et désaccouplée, reliée en transmission à un arbre apte à être actionné par le moteur d'entraînement (6), par exemple à l'arbre principal (11), **en ce que** la ligne de transmission (18, 22, 23) interne de la boîte de vitesses est réalisée rapport de transmission tel que lorsque la ligne de transmission (18, 22, 23) interne est accouplée, ladite au moins une roue d'entraînement (12) est entrainée avec une vitesse qui est supérieure à la vitesse de l'entraînement par l'intermédiaire de l'élément d'accouplement (13) apte à tourner en surrégime, et **en ce que** l'élément d'accouplement (13) apte à tourner en surrégime est réalisé de telle sorte qu'une rotation en surrégime de la roue d'entraînement (12) est possible avec une vitesse supérieure à la vitesse lors d'un entraînement de la roue d'entraînement (12) par l'intermédiaire de l'élément d'accouplement apte à tourner en surrégime.

7. Bande de dosage selon la revendication 6, **caractérisée en ce que** pour chaque bande transporteuse (5), il est prévu respectivement au moins une roue d'entraînement (12), qui est reliée en transmission à l'arbre principal (11) par l'intermédiaire de l'élément d'accouplement (13) apte à tourner en surrégime et, en même temps, aussi par l'intermédiaire d'une ligne de transmission (18, 22, 23) interne de la boîte de vitesses.

8. Bande de dosage selon la revendication 6 ou 7, **caractérisée en ce que** ladite au moins une roue d'entraînement (12) de ladite au moins une bande transporteuse (5) à commander est disposée avec l'élément d'accouplement (13) apte à tourner en surrégime sur l'arbre principal (11).

9. Bande de dosage selon l'une des revendications 6 à 8, **caractérisée en ce que** pour chaque bande transporteuse (5) à commander, il est prévu une ligne de transmission (18, 22, 23) interne de la boîte de vitesses apte à être accouplée et désaccouplée individuellement.

10. Bande de dosage selon l'une des revendications 6 à 9, **caractérisée en ce que** l'élément d'accouplement (13) apte à tourner en surrégime est une roue libre (13).

11. Bande de dosage selon l'une des revendications 6 à 10, **caractérisée en ce que** la ligne de transmission (18, 22, 23) apte à être accouplée et désaccouplée comporte un embrayage (23) induisant l'accouplement et le désaccouplement.

12. Bande de dosage selon l'une des revendications 6 à 11, **caractérisée par** un arbre de verrouillage (14), qui est relié en transmission à l'arbre principal (11) par l'intermédiaire d'un premier tronçon (18) de la ligne de transmission interne de la boîte de vitesses et peut être relié, par l'intermédiaire d'un deuxième tronçon (22) de la ligne de transmission interne de la boîte de vitesses, et de manière commandée, à ladite au moins une roue d'entraînement (12) de ladite au moins une bande transporteuse (5).

13. Bande de dosage selon la revendication 12, **caractérisée en ce que** le premier et/ou le deuxième tronçon (22) de la ligne de transmission interne de la boîte de vitesses est formé par un entraînement à courroie, de préférence un entraînement à courroie crantée, ou par un entraînement à chaîne.

14. Bande de dosage selon l'une des revendications 11 à 13, **caractérisée en ce que** l'embrayage (23), ainsi que la roue (19) du deuxième tronçon de ladite au moins une ligne de transmission interne de la boîte de vitesses, sont prévus sur l'arbre de verrouillage (14).

15. Bande de dosage selon l'une des revendications 12 à 14, **caractérisée en ce que** l'arbre de verrouillage (14), ainsi que le premier tronçon (18) de la ligne de transmission interne de la boîte de vitesses, reliant en transmission ledit arbre de verrouillage avec l'arbre principal (11), est prévu conjointement pour toutes les bandes transporteuses (5) commander ou les roues d'entraînement (13) de celles-ci.

16. Bande de dosage selon l'une des revendications précédentes, **caractérisée en ce que** le moteur d'entraînement est un motoréducteur (6).

17. Bande de dosage selon l'une des revendications précédentes, **caractérisée en ce que** les bandes transporteuses (5) sont des chaînes de transport.

18. Bande de dosage selon l'une des revendications précédentes, **caractérisée en ce que** ladite au moins une bande transporteuse (5) à commander peut être actionnée par l'intermédiaire d'une boîte de vitesses (7) au choix avec une première vitesse (n1) et une deuxième vitesse (n2) supérieure de 20 % environ.

19. Bande de dosage selon l'une des revendications précédentes et formant une partie intégrante d'une voie de transport comportant au moins une bande transporteuse (8) supplémentaire située en amont de la bande de dosage (1) dans le sens de transport (A) et/ou adjacente à la bande de dosage (1) dans le sens de transport (A), **caractérisée en ce que** ladite au moins une bande transporteuse (5) embrayable de la bande de dosage (1) peut être actionnée par le moteur d'entraînement (6) et la boîte de vitesses (7) de telle sorte que la vitesse plus faible est de 10% environ inférieure à la vitesse de transport de ladite au moins une bande transporteuse (8) situé en amont et/ou de ladite au moins une bande transporteuse (8) adjacente, et la vitesse plus élevée est de 10 % environ supérieure à ladite vitesse de transport.
